# FASCICULE DE BREVET EUROPEEN

(11) **EP 1 746 779 B1**
(45) Date de publication et mention de la délivrance du brevet: **05.03.2008**
(21) Numéro de dépôt: 06291154.0
(22) Date de dépôt: 13.07.2006
(51) Int. Cl.: H04L 12/28

(54) **Architecture d'une passerelle domestique orientée multiservices**
Architektur für ein multiserviceorientiertes Heimnetzwerksgateway
Multiservice oriented domestic gateway architecture

(30) Priorité: 18.07.2005 FR 0507631
(43) Date de publication de la demande: 24.01.2007
(73) Titulaire: Sagem Communication S.A., 75015 Paris (FR)
(72) Inventeur: Hervo, Vincent, 92100 Boulogne Billancourt (FR); Dalle, Eric, 92370 Chaville (FR)
(74) Mandataire: Maillet, Alain

(56) Documents cités:
- EP-A- 1 017 206
- EP-A- 1 441 483
- WO-A-01/71977
- US-A1- 2005 086 495

## Description

La présente invention concerne une passerelle domestique destinée à acheminer simultanément plusieurs services d'un réseau de communication vers des équipements domestiques. La présente invention concerne également un système de diffusion de ces services.

Une passerelle domestique est un dispositif qui permet de distribuer des services fournis par un opérateur ou un fournisseur de services au travers d'un réseau de communication, tel que le réseau Internet, vers des équipements domestiques adaptés à présenter ces services à un usager. Ces services se différencient par les moyens utilisés pour les acheminer : soit un service est acheminé au travers d'une connexion point-à-point également appelée tunnel, soit il est acheminé sans création de tunnel.

Dans le premier cas, un tunnel est établi entre un équipement réseau de l'opérateur ou du fournisseur de services et l'équipement domestique à l'origine de la demande d'accès à ce service. Les autres équipements domestiques connectés à la passerelle domestique ne peuvent accéder à ce service via le même tunnel. On parlera alors de service isolé par tunnel. On peut citer notamment la demande de brevet internationale WO 0171977.

Dans le second cas, le service est acheminé jusqu'à un équipement domestique sans utiliser de tunnel. On parlera alors de service commun du fait que tout équipement domestique connecté à la passerelle domestique est susceptible d'accéder à ce service. On peut citer notamment la demande de brevet européen EP 1017206.

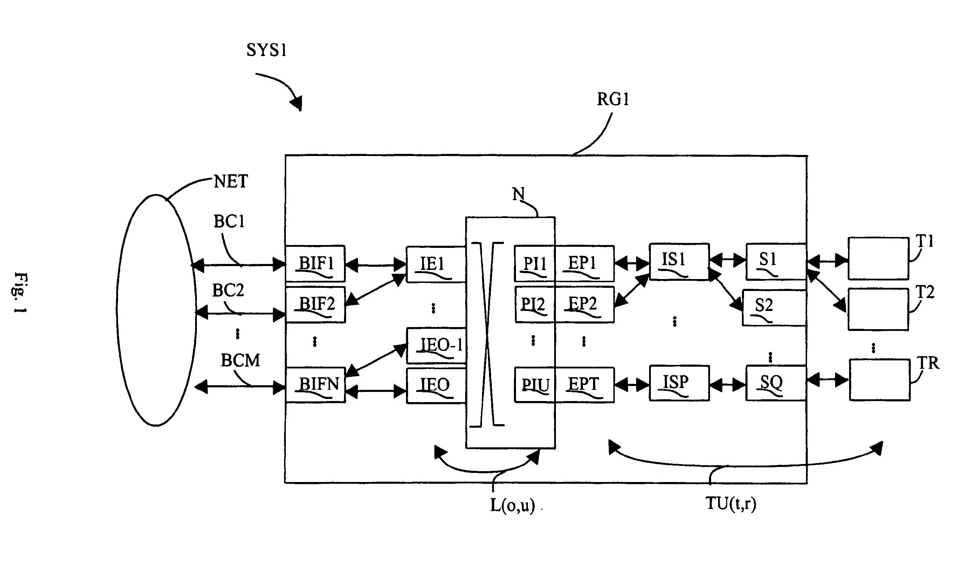

La Fig. 1 représente un schéma synoptique d'un exemple d'un système SYS 1 de diffusion de services vers des équipements domestiques via une passerelle domestique RG1 selon l'état de la technique. Le système SYS1 comporte une passerelle domestique RG1 connectée à un réseau de communication NET par l'intermédiaire de connexions large bande BCₘ (m=1,,...,M). Chacune de ces connexions aboutit à un port d'entrée BIFₙ (n=1,...,N) de la passerelle domestique RG1. Par exemple, la connexion BC1 est une connexion GigaBits Ethernet, la connexion BC2 est une connexion ADSL de 20 Mbits/s et la connexion BC_{M} est une connexion WiMax. Ces connexions étant de nature différente, la passerelle domestique RG1 comporte des interfaces réseau IEₒ (o=1,...,O) appropriées qui permettent à la passerelle de pouvoir recevoir et envoyer des données via les connexions BCₘ. Chaque port d'entrée BIFₙ est associé à au moins une interface réseau IEₒ. Selon l'exemple de la Fig. 1, le port d'entrée BIFN est relié aux interfaces réseaux IEₒ₋₁ et IEₒ qui sont chacune dédiées à un circuit virtuel (Virtual Circuit) ATM acheminé via la connexion BCM. De plus, plusieurs ports d'entrée BIFₙ peuvent également être reliés à une même interface réseau IEₒ dans le cas où les connexions aboutissant à ces ports d'entrée sont de même nature. Selon l'exemple de la Fig. 1, les ports d'entrée BIB₁ et BIF₂ étant prévus pour que des connexions Ethernet BC₁ et BC₂ soient établies, ces ports d'entrée peuvent donc être reliés à la même interface réseau, en l'occurrence l'interface réseau IE₁.

La passerelle domestique RG1 comporte également des ports de sortie Sq (q=1,...,Q) auxquels sont connectés des équipements domestiques Tᵣ (r=1,...R) au travers d'une connexion soit filaire (Ethernet, USB, IEEE1394, etc.), soit sans fil (WiFi, Bluetooth, etc.). Un équipement domestique Tᵣ est, de manière non limitative un ordinateur de bureau, un téléphone ou une passerelle de gestion de flux vidéo plus connue sous l'anglicisme Set Top Box. Chaque port de sortie Sq est relié à une interface de sortie ISₚ (p=1,...,P) et chaque interface de sortie est reliée à au moins un point de terminaison EPₜ (t=1,...,T).

De plus, la passerelle domestique RG1 comporte un module N de définition de liaisons internes comportant en outre des sorties dites point internes PIᵤ (u=1, ...-U). Une liaison interne L(o,u) est définie entre une interface réseau IEₒ et un point interne PIᵤ ou un point de terminaison EPₜ, étant donné qu'à chaque point de terminaison EPₜ correspond un seul point interne PIᵤ. Ceci n'exclu pas le fait que plusieurs interfaces réseau peuvent être liées à un même point interne PIᵤ et que plusieurs points internes peuvent être reliés à une même interface réseau. En regard avec la Fig. 1, chaque point interne PIᵤ est associé à un point de terminaison EPₜ de manière à ce qu'un service SERVₛ accessible à partir d'une interface réseau IEₒ soit acheminé jusqu'à un point de terminaison EPₜ et donc jusqu'à un équipement domestique Tᵣ via un tunnel TU(t,r).

Généralement, le module de définition de liaisons internes N est un routeur NAT (Nework Adress Translation : traduction d'adresse réseau). Un routeur NAT établit à la demande et gère chaque liaison interne. De plus, dans le cas où le réseau NET est un réseau de type IP, un routeur NAT permet de cacher les adresses, par exemple l'adresse IP (Internet Protocol), des équipements domestiques Tᵣ à un équipement réseau relié à la passerelle domestique RG1 par l'intermédiaire du réseau de communication NET. Un routeur NAT a donc pour responsabilité de traduire les adresses privées (des équipements domestiques Tr) en une adresse publique (celle de la passerelle domestique RG1 vue par l'équipement réseau) et réciproquement.

Lors d'une demande d'accès à un service SERVₛ émise par un équipement domestique Tr, un tunnel TU(t,r) est établi entre un point de terminaison EPₜ et l'équipement domestique Tᵣ afin que le service SERVₛ soit acheminé de manière isolée depuis le point de terminaison EPₜ jusqu'à l'équipement domestique Tᵣ. Pour cela, par exemple un tunnel PPP (Point to Point Protocol), est créé entre l'équipement domestique Tᵣ et le point de terminaison EPₜ à l'aide du protocole Point-à-Point (Point-to-Point Protocol) défini par la demande de commentaires RFC 1661. Le but est de créer une liaison point-à-point (tunnel PPP) qui encapsule par exemple des trames Ethernet afin notamment de rendre plus confidentielles les données du service SERVs acheminées par ces trames.

Une fois établi, un tunnel TU(t,r) est maintenu de manière permanente évitant ainsi à l'équipement domestique Tr de créer à nouveau un tunnel lors d'un prochain accès au même service SERVₛ. On peut noter qu'un même équipement domestique Tᵣ peut créer plusieurs tunnels TU(t,r), par exemple un premier tunnel TU(t=1,r=1) pour accéder à un premier service SERV₁ et un deuxième tunnel TU(2,1) pour accéder à un deuxième service SERV₂. De plus, plusieurs tunnels TU(t,r), TU(t,r+1),... peuvent être établis entre des équipements domestiques Tᵣ, Tᵣ₊₁,... et un même point de terminaison EPₜ.

Afin d'acheminer de manière isolée les services fournis par un opérateur ou un fournisseur de services vers les équipements domestiques Tᵣ, la passerelle domestique RG1 est en charge d'établir et de gérer à la fois les connexions avec le réseau de communication NET et les tunnels TU(t,r) ainsi créés.

L'utilisation de tunnels est certes très pratique car elle facilite d'une part, la diffusion des données d'un service d'un équipement réseau jusqu'à un équipement domestique et, d'autre part, elle permet une certaine confidentialité lors du transfert de ces données. Cependant, l'architecture de la passerelle domestique RG1 ne permet pas l'acheminement de services communs à plusieurs équipements domestiques Tᵣ du fait que d'une part, un service ne peut être acheminé autrement que par tunnel et, que d'autre part, les ports de sortie auxquels sont connectés lesdits équipements domestiques ne communiquent pas entre eux.

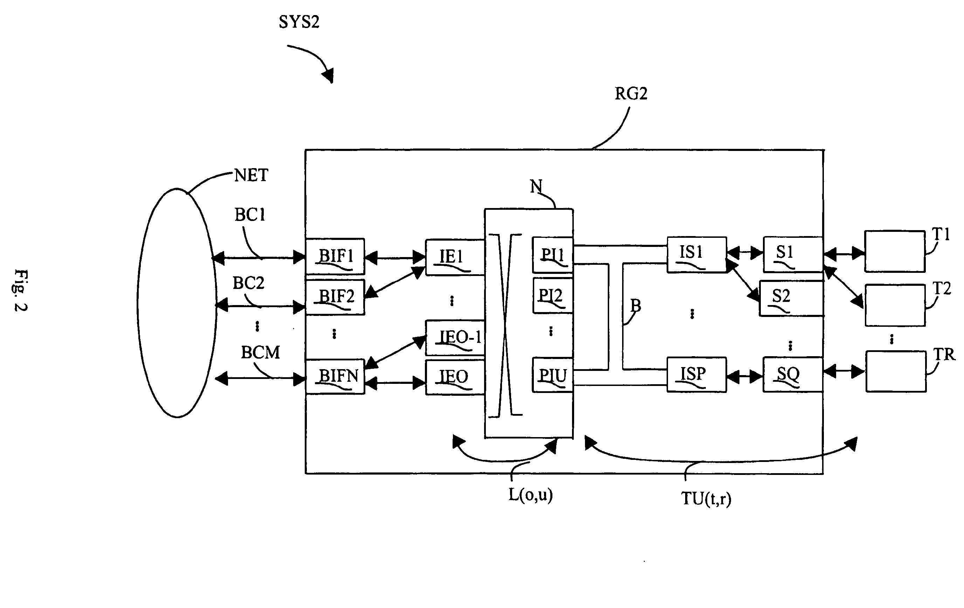

La Fig. 2 représente un schéma synoptique d'un exemple d'un système SYS2 de diffusion de services vers des équipements domestiques via une autre passerelle domestique RG2 selon l'état de la technique. Les éléments du système SYS2 identiques à ceux du système SYS 1 décrit en relation avec la Fig. 1 portent les mêmes références.

Le système SYS2 se différencie du système SYS1 par le fait qu'il comporte une passerelle domestique RG2 différente de celle RG1 de la Fig. 1. La passerelle domestique RG2 se différencie de la passerelle domestique RG1 du fait d'une part, qu'elle ne comporte pas de points de terminaison (impossibilité de créer des tunnels) et, d'autre part, que les interfaces de sortie ISₚ et les points internes PIᵤ sont reliés entre eux par un bus B. Cette dernière caractéristique permet aux équipements domestiques d'accéder à un même service commun accessible à partir d'un équipement réseau d'un opérateur ou d'un fournisseur de services et ce, quel que soient les ports de sortie Sq auxquels sont connectés ces équipements domestiques. Cependant, l'architecture de la passerelle domestique RG2 ne permet pas l'acheminement de services de manière isolée (par tunnel), provoquant ainsi un maintien plus difficile de la connexion utilisée pour l'acheminement de certains services entre un équipement réseau de l'opérateur ou du fournisseur de services et un équipement domestique Tᵣ. De plus, les données de ces services sont transférées sans aucune confidentialité et sont donc accessibles par tout équipement domestique connecté à la passerelle domestique.

Le but de la présente invention est donc de résoudre le problème soulevé ci-dessus de manière à permettre à des équipements domestiques de pouvoir accéder simultanément à des services isolés par tunnel tout en permettant à ces équipements domestiques de pouvoir accéder à des services communs.

Pour ce faire, la présente invention prévoit une passerelle domestique destinée à acheminer simultanément des services d'un réseau de communication à partir d'interfaces réseau de ladite passerelle domestique jusqu'à des interfaces de sortie de ladite passerelle domestique au travers de liaisons internes, chacune desdites liaisons internes étant destinée à acheminer un desdits services entre l'une desdites interfaces réseau et un point interne auquel est relié au moins un desdits équipements domestiques via une desdites interfaces de sortie, lesdites interfaces de sortie et lesdits points internes étant reliés par l'intermédiaire d'un bus destiné à acheminer un premier desdits services à l'ensemble desdites interfaces de sortie, ladite passerelle domestique étant caractérisée en ce qu'elle comporte des moyens pour créer un tunnel destiné à l'acheminement d'un second desdits services entre un desdits points internes et un desdits équipements domestiques auquel il est relié.

Selon un mode de réalisation de la présente invention, la passerelle domestique comporte :
- des moyens pour obtenir une donnée de configuration relative à un service demandé,
- des moyens pour configurer une desdites liaisons internes à partir de ladite donnée de configuration.

Selon un mode de réalisation de la présente invention, ladite donnée de configuration définissant une relation bijective entre un point d'accès et un desdits services demandés, la passerelle domestique comporte des moyens pour définir une liaison interne entre une desdites interfaces réseau associée avec le point d'accès défini par ladite relation de ladite donnée de configuration et un desdits points internes.

Selon un mode de réalisation de la présente invention, ladite donnée de configuration définissant une relation entre un point d'accès et au moins l'une desdites interfaces réseau, la passerelle domestique comporte des moyens pour définir une liaison interne entre la ou une des interfaces réseau et le point d'accès définis par ladite relation de ladite donnée de configuration, ledit point d'accès étant associé à un desdits points internes.

Selon un mode de réalisation de la présente invention, ladite donnée de configuration définissant une première relation bijective entre un point d'accès et un service demandé et une deuxième relation entre ledit point d'accès et au moins une desdites interfaces réseau, la passerelle domestique comporte des moyens pour définir une liaison interne entre la ou une des interfaces réseau et le point d'accès définis par les relations de ladite donnée de configuration, ledit point d'accès étant associé à un desdits points internes.

Selon un mode de réalisation de la présente invention, la passerelle domestique comporte des moyens pour mémoriser une donnée de configuration de liaisons internes.

La présente invention concerne également un système d'acheminement de services d'un réseau de communication vers des équipements domestiques, caractérisé en ce qu'il comporte une passerelle domestique selon la présente invention.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente un schéma synoptique d'un exemple d'un système de diffusion de services vers des équipements domestiques via une passerelle domestique selon l'état de la technique.
La Fig. 2 représente un schéma synoptique d'un exemple d'un système de diffusion de services vers des équipements domestiques via une autre passerelle domestique selon l'état de la technique.
La Fig. 3 représente un schéma synoptique d'un exemple d'un système de diffusion de services vers des équipements domestiques via une passerelle domestique selon un mode de réalisation de la présente invention.
La Fig. 4 représente un schéma synoptique d'un exemple d'un système de diffusion de services vers des équipements domestiques via une passerelle domestique selon un mode de réalisation de la présente invention.
La Fig. 5 représente un schéma synoptique d'un exemple d'un système de diffusion de services vers des équipements domestiques via une passerelle domestique selon un mode de réalisation de la présente invention.

La Fig. 6 représente un schéma synoptique d'un exemple d'un système SYS3 de diffusion de services vers des équipements domestiques via une passerelle domestique RG3 selon un mode de réalisation de la présente invention. Les éléments de ce système SYS3 identiques à ceux des systèmes SYS 1 et SYS2 de l'état de la technique décrits respectivement en relation avec les Fig. 1 et Fig. 2 portent les mêmes références.

Le système SYS3 se différencie des systèmes SYS1 et SYS2 par le fait qu'il comporte une passerelle domestique RG3 différente des passerelles domestiques des systèmes SYS1 et SY2. L'architecture interne de la passerelle domestique RG3 se différencie de celles de l'état de la technique (RG1 et RG2) en ce qu'elle comporte un bus B1 qui relie d'une part, les interfaces de sortie ISₚ aux points internes PIᵤ (u=1,...,T) du module N au travers de points de terminaisons EPₜ, et, d'autre part, directement les interfaces de sortie ISₚ aux point internes PIᵤ (u=T+1,...,U), c'est-à-dire sans passer par un point de terminaison EPₜ.

L'architecture de la passerelle domestique RG3 est particulièrement avantageuse car elle permet à un équipement domestique Tᵣ d'accéder simultanément à plusieurs services et ce, indépendamment du port de sortie Sq auquel est connecté l'équipement domestique Tᵣ. Pour cela, chaque service accessible à partir d'un point de terminaison EPₜ est acheminé de manière isolée jusqu'à l'équipement domestique Tᵣ par un tunnel TU(t,r) et chaque service commun accessible à partir d'un point interne PIᵤ (u=T+1,...,U) est acheminé par une connexion CO(u,r). On peut remarquer que plusieurs équipements domestiques Tᵣ, Tᵣ₊₁,... sont susceptibles de créer des connexions CO(u,r),CO(u,r+1),... de manière à pouvoir accéder simultanément à un même service commun. Ce service commun est par exemple un service de gestion d'un réseau local constitué des équipements domestiques connectés à la passerelle domestique, service permettant à ces équipements de communiquer entre eux localement.

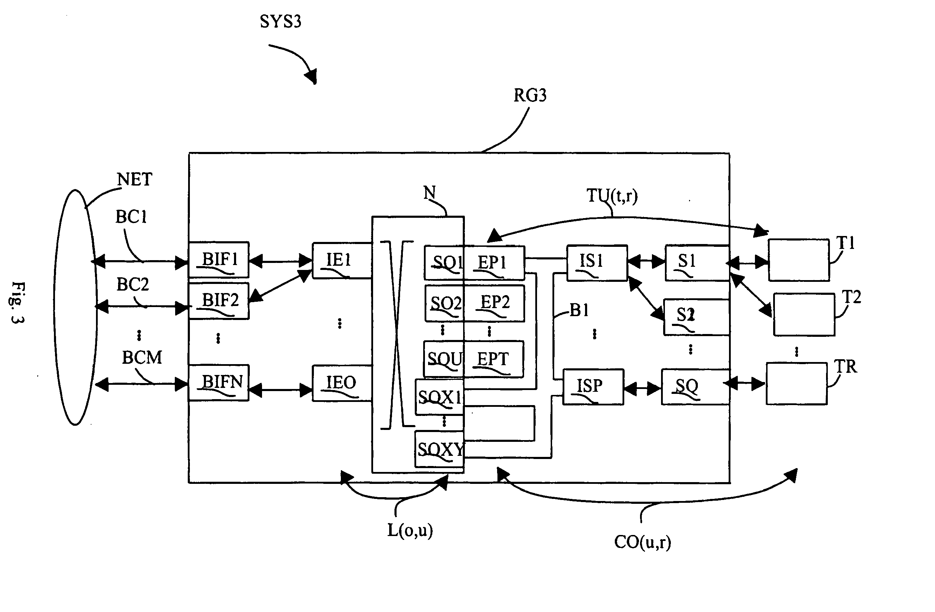

Prenons l'exemple de la Fig. 3 dans lequel l'équipement domestique T₁ est une Set Top Box et où l'équipement domestique T_{R} est un ordinateur de bureau. Un tunnel T(t=1,r=1) a été créé entre l'équipement domestique T₁ et le point de terminaison EP₁ afin que l'équipement domestique T₁ reçoive un service audio-visuel tel qu'un service de vidéo à la demande. Les données vidéo délivrées au cours de la diffusion de ce service étant codées, l'équipement domestique T₁ peut ne pas comporter des moyens de décodage appropriés rendant ainsi l'accès à ces données, et donc à ce service, impossible sans l'aide d'un tiers, en l'occurrence l'équipement domestique T_{R} qui comporte ces moyens de décodage. Pour cela, les équipements domestiques T₁ et T_{R} qui sont, on le rappelle, reliés par le bus B1 au travers des interfaces de sortie ISₚ, doivent accéder à un service commun dont la fonction est d'assurer une mise en réseau correcte de ces deux équipements. Ce service commun est acheminé au travers du bus B1 par la passerelle domestique via les connexions CO(u=1, t=1) et CO(u=2, t=R) définies respectivement par les points internes PI₁ et PI₂ et les équipements domestiques T₁ et T_{R}. Ainsi, selon cet exemple, l'équipement domestique T₁ reçoit simultanément les données d'un service isolé via le tunnel TU(r=1,t=1) et les données d'un service commun via le bus B1 sans que ces données ne soient isolées dans un tunnel.

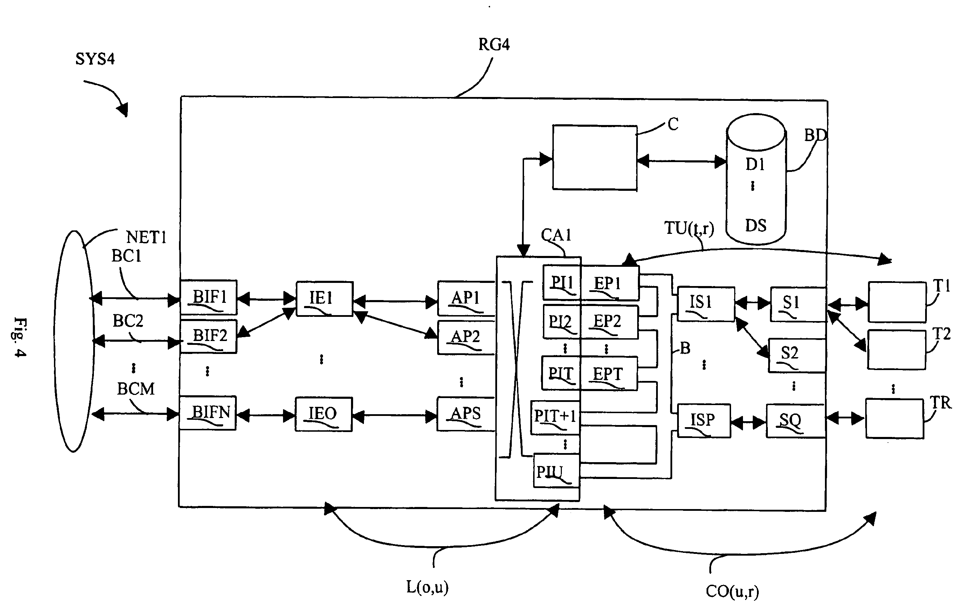

La Fig. 4 représente un schéma synoptique d'un exemple d'un système SYS4 de diffusion de services vers des équipements domestiques via une passerelle domestique RG4 selon un mode de réalisation de la présente invention. Les éléments du système SYS4 identiques à ceux du système SYS3 décrit en relation avec la Fig. 3 portent les mêmes références.

Le système SYS4 se différencie du système SYS3 par le fait qu'il comporte une passerelle domestique RG4 différente de la passerelle domestique RG3 du système SYS3. L'architecture interne de la passerelle domestique RG4 se différencie de l'architecture RG3 en ce qu'elle comporte au moins un point d'accès APₛ (s=1,...S) relié(s) à au moins une interface réseau IEₒ, et un module CA1 d'association entre point d'accès APₛ et point interne PIᵤ (u=1,...U) qui est, de manière non limitative, un programme d'ordinateur.

Le module CA1 d'association entre point d'accès APₛ et point interne PIᵤ comporte des moyens pour associer un point d'accès APₛ à au moins un point interne PIᵤ.

L'architecture interne de la passerelle domestique RG4 se différencie également de l'architecture RG3 du fait qu'elle comporte un module C de configuration de liaisons internes et des moyens de mémorisation tels que par exemple une base de données BD.

Le module C de configuration de liaisons internes est relié d'une part, au module CA1 d'association entre point d'accès APₛ et point interne PIᵤ et, d'autre part, à la base de données BD.

La base de données BD mémorise des données, dites données de configuration de liaisons internes Dₛ (s=1,...,S). Les données de configuration de liaisons internes sont par exemple initialisées lors de la fabrication de la passerelle domestique RG4. De plus, elles peuvent être mises à jour, ou de nouvelles données de configuration peuvent être ajoutées à cette base de données lorsque de nouveaux services sont fournis par un opérateur ou un fournisseur de services. Par exemple, la mise à jour ou l'ajout de nouvelles données de configuration de liaisons internes sont réalisés au travers du réseau de communication NET.

Selon ce mode de réalisation, chaque donnée de configuration Dₛ définit une relation bijective entre un point d'accès APₛ et un service SERVₛ. Une telle définition de donnée de configuration est particulièrement avantageuse car elle permet à un opérateur ou un fournisseur de service de modifier sa politique de diffusion des services en modifiant la relation bijective entre le service SERVₛ et le point d'accès APₛ par remplacement du point d'accès APₛ par un nouveau point d'accès APₛ₊₁. A ce moment-là, le module C de configuration de liaisons internes informe le module CA1 d'association entre point d'accès APₛ et point interne PIᵤ de la modification de la donnée de configuration Dₛ. Le module CA1 remplace alors la ou chaque association entre l'ancien point d'accès APₛ et le ou chaque point interne PIᵤ auquel il est associé par une nouvelle association entre le nouveau point d'accès APₛ₊₁ et le ou chaque point interne PIᵤ.

Le module de configuration de lien C comporte des moyens pour obtenir une donnée de configuration de liaisons internes Dₛ relative à un service SERVₛ à partir de la base de données BD, c'est-à-dire, selon ce mode de réalisation, des moyens pour indiquer au module CA1 le point d'accès APₛ au service SERVₛ.

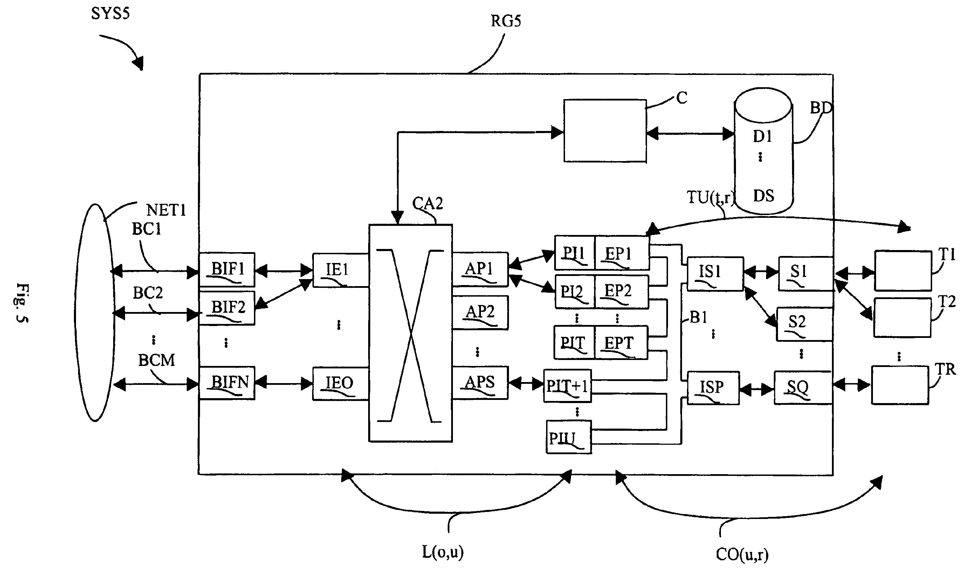

La Fig. 5 représente un schéma synoptique d'un exemple d'un système SYS5 de diffusion de services vers des équipements domestiques via une passerelle domestique RG5 selon un mode de réalisation de la présente invention. Les éléments de ce système SYS5 identiques à ceux du système SYS3 décrit en relation avec la Fig. 3 portent les mêmes références.

Le système SYS5 se différencie du système SYS3 par le fait qu'il comporte une passerelle domestique RG5 différente de la passerelle domestique du système SYS3.

L'architecture interne de cette passerelle domestique RG5 se différencie de l'architecture interne de la passerelle domestique RG3 de la Fig. 3 par le fait qu'elle comporte un module CA2 d'association entre interface réseau IEₒ et point d'accès APₛ. Ce module CA2 d'association entre interface réseau et point d'accès comporte des moyens pour associer une interface réseau IEₒ à partir de laquelle au moins un service SERVs est accessible à un point d'accès APₛ. Le module CA2 est relié au module C de configuration de liaisons internes.

Selon ce mode de réalisation, la base de données BD comporte des données de configuration de liaisons internes Dₛ qui définissent une relation entre au moins une interface réseau IEₒ et un point d'accès APₛ au service SERVs.

Le module de configuration de lien C comporte des moyens pour obtenir une donnée de configuration de liaisons internes Dₛ relative à un service SERVₛ de la base de données BD, c'est-à-dire, selon ce mode de réalisation, des moyens pour indiquer au module CA2 d'une part, le point d'accès APₛ au service SERVₛ et, d'autre part, la ou une des interfaces réseau IEₒ à partir de laquelle le service SERVₛ est accessible.

Ce mode de réalisation est particulièrement avantageux car il permet à un opérateur de modifier sa politique de diffusion en modifiant la ou les relation(s) entre le point d'accès APₛ au service SERVₛ et la ou les interface(s) réseau IEₒ par remplacement de la ou une des interfaces réseau IEₒ par une nouvelle interface réseau IEₒ₊₁.

Dans le cas où une donnée de configuration de liaisons internes Dₛ a été modifiée, le module C de configuration de liaisons internes informe le module CA2 d'association entre interface réseau IEₒ et points d'accès APₛ de la modification de la donnée de configuration Dₛ, le module CA2 remplaçant alors chaque association entre une ancienne interface réseau IEₒ et un point d'accès APₛ à un service SERVₛ par une nouvelle association entre la nouvelle interface réseau IEₒ₊₁ et le point d'accès APₛ.

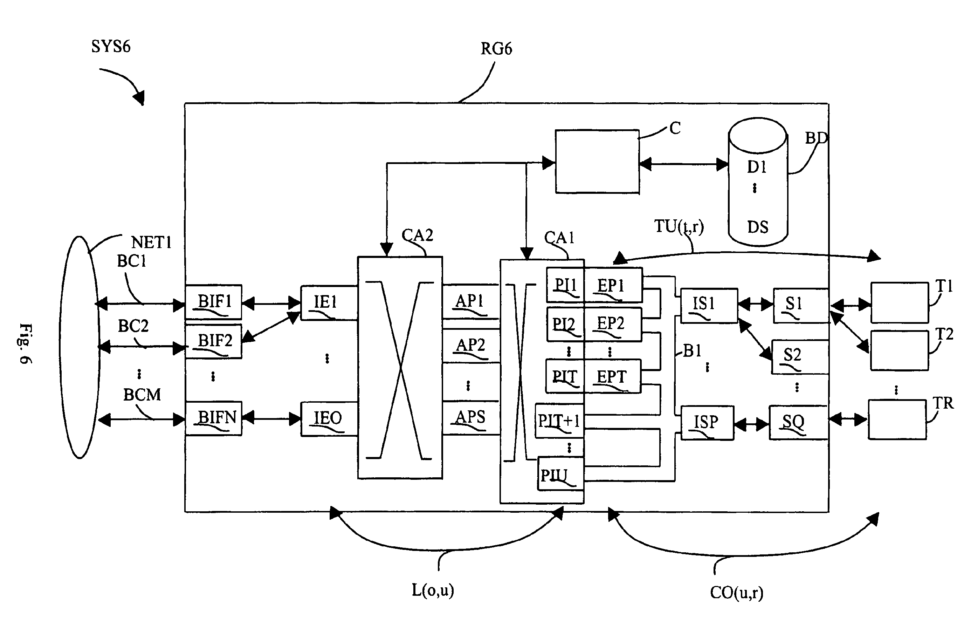

La Fig. 6 représente un schéma synoptique d'un exemple d'un système SYS6 de diffusion de services vers des équipements domestiques via une passerelle domestique RG6 selon un mode de réalisation de la présente invention. Les éléments du système SYS6 identiques à ceux des systèmes SYS4 et SYS5 décrits respectivement en relation avec les Fig. 4 et Fig. 5 portent les mêmes références.

Le système SYS6 se différencie des systèmes SYS4 et SYS5 par le fait qu'il comporte une passerelle domestique RG6 différente des passerelles domestiques des systèmes SYS4 et SYS5. L'architecture interne de cette passerelle domestique RG6 se différencie de l'architecture interne des passerelles domestiques RG4 et RG5 par le fait qu'elle comporte un module CA1 d'association entre point d'accès APₛ et point interne PIᵤ, un module CA2 d'association entre interface réseau IEₒ et point d'accès APₛ, un module C de configuration de liaisons internes et une base de données BD. Ces composants ont été décrits soit en relation avec la Fig. 4 soit en relation avec la Fig. 5. Les modules CA1 et CA2 sont reliés au module C de configuration de liaisons internes, lui-même relié à la base de données BD.

Selon ce mode de réalisation, la base de données BD comporte des données de configuration de liaisons internes Dₛ qui définissent d'une part, une relation bijective entre un point d'accès APₛ et un service SERVₛ et, d'autre part, une deuxième relation entre au moins une interface réseau IEₒ et le point d'accès APₛ au service SERVs.

Le module de configuration de lien C comporte des moyens pour obtenir une donnée de configuration de liaisons internes Dₛ relative à un service SERVₛ à partir de la base de données BD, c'est-à-dire, selon ce mode de réalisation de l'architecture interne, des moyens pour indiquer d'une part aux modules CA1 et CA2 le point d'accès APₛ au service SERVₛ, et, d'autre part, au module CA2 la (les) interface(s) réseau IEₒ à partir de laquelle (desquelles) le service SERVₛ est accessible.

## Revendications

1. Passerelle domestique destinée à acheminer simultanément des services d'un réseau de communication (NET) à partir d'interfaces réseau (IEₒ) de ladite passerelle domestique jusqu'à des interfaces de sortie (ISp) de ladite passerelle domestique au travers de liaisons internes (L(o,u)), chacune desdites liaisons internes étant destinée à acheminer un desdits services entre l'une desdites interfaces réseau (IEₒ) et un point interne (PIᵤ) auquel est relié au moins un équipement domestique (Tᵣ) via une desdites interfaces de sortie (ISₚ), lesdites interfaces de sortie et lesdits point internes (PIᵤ) étant reliés par l'intermédiaire d'un bus destiné à acheminer un premier desdits services à l'ensemble desdites interfaces de sortie (ISₚ), ladite passerelle domestique étant **caractérisée en ce qu'**elle comporte des moyens pour créer un tunnel destiné à l'acheminement d'un second desdits services entre un desdits points internes (PIᵤ) et un desdits équipements domestiques auquel il est relié.

2. Passerelle domestique selon la revendication 1, **caractérisée en ce qu'**elle comporte :
- des moyens pour obtenir une donnée de configuration (Ds) relative à un service demandé,
- des moyens pour configurer une desdites liaisons internes (L(o,u)) à partir de ladite donnée de configuration (Dₛ).

3. Passerelle domestique selon la revendication 2, ladite donnée de configuration (Dₛ) définissant une relation bijective entre un point d'accès (APₛ) et un desdits services demandés, **caractérisée en ce qu'**elle comporte des moyens pour définir une liaison interne (L(o,u)) entre une desdites interfaces réseau (IEₒ) associée avec le point d'accès (APₛ) défini par ladite relation de ladite donnée de configuration (Dₛ) et un desdits points internes (PIᵤ).

4. Passerelle domestique selon la revendication 2, ladite donnée de configuration (Dₛ) définissant une relation entre un point d'accès (APₛ) et au moins l'une desdites interfaces réseau (IEₒ), **caractérisée en ce qu'**elle comporte des moyens pour définir une liaison interne (L(o,u)) entre la ou une des interfaces réseau (IEₒ) et le point d'accès (APₛ) définis par ladite relation de ladite donnée de configuration (Dₛ), ledit point d'accès étant associé à un desdits points internes (PIᵤ).

5. Passerelle domestique selon la revendication 2, ladite donnée de configuration (Dₛ) définissant une première relation bijective entre un point d'accès (APₛ) et un service demandé et une deuxième relation entre ledit point d'accès (APₛ) et au moins une desdites interfaces réseau (IEₒ), **caractérisé en ce qu'**elle comporte des moyens pour définir une liaison interne (L(o,u)) entre la ou une des interfaces réseau (IEₒ) et le point d'accès (APₛ) définis par les relations de ladite donnée de configuration (Dₛ), ledit point d'accès étant associé à un desdits points internes (PIᵤ).

6. Passerelle domestique selon l'une des revendications 1 à 5, **caractérisée en ce qu'**elle comporte des moyens pour mémoriser une donnée de configuration de liaisons internes (Ds).

7. Système d'acheminement de services d'un réseau de communication vers des équipements domestiques, **caractérisé en ce qu'**il comporte une passerelle domestique conforme à l'une des revendications précédentes.

## Claims

1. Domestic gateway intended for simultaneously routing services of a communications network (NET) from network interfaces (IEₒ) of said domestic gateway to output interfaces (ISp) of said domestic gateway via internal links (L(o,u)), each of said internal links being intended to route one of said services between one of said network interfaces (IEₒ) and an internal point (PIᵤ) to which at least one domestic apparatus (Tᵣ) is connected via one of said output interfaces (ISₚ), said output interfaces and said internal points (PIᵤ) being connected via a bus intended to route a first of said services to all said output interfaces (ISₚ), said domestic gateway being **characterised in that** it comprises means for creating a tunnel intended for routing a second of said services between one of said internal points (PIᵤ) and one of said domestic apparatus to which it is connected.

2. Domestic gateway according to claim 1, **characterised in that** it comprises:
- means for obtaining configuration data (Dₛ) relating to a requested service,
- means for configuring one of said internal links (L(o,u)) starting from said configuration data (Dₛ).

3. Domestic gateway according to claim 2, said configuration data (Dₛ) defining a bijective relation between an access point (APₛ) and one of said requested services, **characterised in that** it comprises means for defining an internal link (L(o,u)) between one of said network interfaces (IEₒ) associated with the access point (APₛ) defined by said relation of said configuration data (Dₛ) and one of said internal points (PIᵤ).

4. Domestic gateway according to claim 2, said configuration data (Dₛ) defining a relation between an access point (APₛ) and at least one of said network interfaces (IEₒ), **characterised in that** it comprises means for defining an internal link (L(o,u)) between the or one of the network interfaces (IEₒ) and the access point (APₛ) defined by said relation of said configuration data (Dₛ), said access point being associated with one of said internal points (PIᵤ).

5. Domestic gateway according to claim 2, said configuration data (Dₛ) defining a first bijective relation between an access point (APₛ) and a requested service and a second relation between said access point (APₛ) and at least one of said network interfaces (IEₒ), **characterised in that** it comprises means for defining an internal link (L(o,u)) between the or one of the network interfaces (IEₒ) and the access point (APₛ) defined by the relations of said configuration data (Dₛ), said access point being associated with one of said internal points (PIᵤ).

6. Domestic gateway according to one of claims 1 to 5, **characterised in that** it comprises means for storing configuration data for internal links (Dₛ).

7. System for routing services of a communications network to domestic apparatus, **characterised in that** it comprises a domestic gateway according to one of the preceding claims.

## Patentansprüche

1. Heimnetzwerks-Gateway zum simultanen Weiterleiten der Dienste eines Kommunikations-Netzwerks (NET) von Netzwerks-Schnittstellen (IEₒ) des Heimnetzwerks-Gateways zu Ausgangs-Schnittstellen (ISp) des Heimnetzwerks-Gateways über interne Verbindungen (L(o,u)), wobei jede der genannten internen Verbindungen dazu bestimmt ist, einen der genannten Dienste zwischen einer der genannten Netzwerks-Schnittstellen (IEₒ) und einem internen Punkt (Plᵤ) weiterzuleiten, mit dem wenigstens ein Heim-Anschluss (Tᵣ) über eine der Ausgangs-Schnittstellen (ISₚ) verbunden ist, wobei die Ausgangs-Schnittstellen und die internen Punkte (Plᵤ) mittels eines Busses zum Weiterleiten eines ersten der Dienste mit der Gesamtheit der Ausgangs-Schnittstellen (ISp) verbunden sind, wobei das Heimnetzwerks-Gateway **dadurch gekennzeichnet ist, dass** es Mittel zum Erzeugen eines Tunnels zum Weiterleiten eines zweiten Dienstes zwischen einem der internen Punkte (Plᵤ) und einem der Heim-Anschlüsse, mit dem er verbunden ist, aufweist.

2. Heimnetzwerks-Gateway nach Anspruch 1, **dadurch gekennzeichnet, dass** es umfasst:
- Mittel zum Empfangen einer Konfigurations-Angabe (Ds), die auf einen angefragten Dienst bezogen ist,
- Mittel zum Konfigurieren einer der internen Verbindungen (L(o,u)) ausgehend von der Konfigurations-Angabe (Dₛ).

3. Heimnetzwerks-Gateway nach Anspruch 2, wobei die Konfigurations-Angabe (Dₛ) eine bijektive Relation zwischen einem Zugriffs-Punkt (APₛ) und einer der angefragten Dienstleistungen definiert, **dadurch gekennzeichnet, dass** es Mittel zum Definieren einer internen Verbindung (L(o,u)) zwischen einer der Netzwerks-Schnittstellen (IEₒ) aufweist, die mit dem Zugriffs-Punkt (APₛ) verbunden ist, welcher durch die Relation der Konfigurations-Angabe (Dₛ) und einen der internen Punkte (Plᵤ) definiert ist.

4. Heimnetzwerks-Gateway nach Anspruch 2, wobei die Konfigurations-Angabe (Dₛ) eine Relation zwischen einem Zugriffs-Punkt (APₛ) und wenigstens einer der Netzwerks-Schnittstellen (IEₒ) definiert, **dadurch gekennzeichnet, dass** es Mittel zur Definition einer internen Verbindung (L(o,u)) zwischen der oder einer der Netzwerks-Schnittstellen (IEₒ) und dem Zugriffs-Punkt (APₛ) aufweist, welche durch die Relation der Konfigurations-Angabe (Dₛ) definiert sind, wobei der Zugriffs-Punkt auf einen der internen Punkte (Plᵤ) bezogen ist.

5. Heimnetzwerks-Gateway nach Anspruch 2, wobei die Konfigurations-Angabe (Dₛ) eine erste bijektive Relation zwischen einem Zugriffs-Punkt (EPₛ) und einer angefragten Dienstleistung und eine zweite Relation zwischen dem genannten Zugriffs-Punkt (APₛ) und wenigstens einer der Netzwerks-Schnittstellen (IEₒ) definiert, **dadurch gekennzeichnet, dass** es Mittel zur Definition einer internen Verbindung (L(o,u)) zwischen der oder einer der Netzwerks-Schnittstellen (IEₒ) und dem Zugriffs-Punkt (APₛ) aufweist, welche durch die Relationen der Konfigurations-Angabe (Dₛ) definiert sind, wobei der Zugriffs-Punkt mit einem der internen Punkte (Plᵤ) verbunden ist.

6. Heimnetzwerks-Gateway nach einem der Ansprüche 1 bis 5, **dadurch gekennzeichnet, dass** es Mittel zum Speichern einer Konfigurations-Angabe interner Verbindungen (Ds) umfasst.

7. System zum Weiterleiten von Diensten eines Kommunikations-Netzwerks zu Heim-Anschlüssen, **dadurch gekennzeichnet, dass** es ein Heimnetzwerks-Gateway gemäß einem der vorangehenden Ansprüche umfasst.
